# EUROPÄISCHE PATENTANMELDUNG

(11) **EP 2 128 181 A1**
(43) Veröffentlichungstag der Anmeldung: **02.12.2009**
(21) Anmeldenummer: 09007185.3
(22) Anmeldetag: 29.05.2009
(51) Int. Cl.: C08G 18/10, C08G 18/67, C08G 18/81

(54) **Prepolymersystem**

(30) Priorität: 29.05.2008 DE 102008025934
(71) Anmelder: Sommer, Heinrich, 9108 Gonten (CH)
(72) Erfinder: Sommer, Heinrich, 9108 Gonten (CH)
(74) Vertreter: Thiel, Christian

(57) **Zusammenfassung**

Die Erfindung betrifft ein Prepolymersystem zur Erzeugung von Zwei-Komponenten-Dicht-Dämmschäumen, enthaltend eine Prepolymerkomponente mit einem Prepolymer auf Polyurethanbasis, Treibgas und zur Schaumbildung benötigten üblichen Zusatzstoffen, sowie eine davon getrennte Vernetzerkomponente mit einem mit dem Prepolymer reaktiven Vernetzer, wobei das Prepolymer endständige aktivierte Doppelbindungen aufweist und der Vernetzer zur nukleophilen Addition an die aktivierten Doppelbindungen des Prepolymers befähigte Funktionen.

## Beschreibung

Die Erfindung betrifft ein Prepolymersystem zur Erzeugung von 2-Komponenten-Dicht- und Dämmschäumen, wie sie insbesondere als Montageschäume bekannt geworden sind. Solche Prepolymersysteme enthalten eine Prepolymerkomponente mit einem Prepolymer auf Polyurethanbasis, Treibgas und zur Schaumbildung benötigten üblichen Zusatzstoffen sowie getrennt davon eine Vernetzerkomponente mit einem mit dem Prepolymer reaktiven Vernetzer.

Dämmschäume zum Ausschäumen von Hohlräumen werden vielfach als Ortschäume aus Druckdosen unter Verwendung von Polyurethanprepolymermischungen erzeugt. Hauptsächliche Anwendungsgebiete sind das Bauwesen, aber auch technische Produkte, bei denen Hohlräume zur Vermeidung von Schwitzwassernestern verfüllt werden müssen. Im Bausektor dienen solche Schäume insbesondere auch dem Einbau von Tür- und Fensterzargen.

Prepolymere zur Erzeugung von Polyurethan-Dämmschäumen besitzen zur Vernetzung befähigte Polyisocyanatgruppen, die mit einer Polyolkomponente oder Wasser unter Bildung des eigentlichen Polymers reagieren. Die Schaumstruktur wird durch bei der Reaktion mit Wasser erzeugtes CO₂ und/oder in der Prepolymerabmischung vorhandenes Treibgas erzeugt.

Die in den Prepolymerabmischungen zur Erzeugung von Polyurethan-Dämmschäumen vorhandenen Isocyanatgruppen sind hoch reaktiv und wirken ausgesprochen reizend und toxisch. Soweit die Abmischungen mit Treibgasen aus Aerosoldosen abgegeben werden, besteht, insbesondere bei unsachgemäßer Handhabung, die Gefahr der Aerosolbildung, so dass Isocyanatgruppenhaltiges Material auf die Haut und in die Atemwege gelangen kann. Dies ist hochgradig unerwünscht.

Die in Druckdosen zur Schaumerzeugung verwandten Prepolymerabmischung auf Isocyanatbasis enthalten, neben relativ hochmolekularen Prepolymeren, zumeist auch nicht oder nur zu niedermolekularen Prepolymeren abreagiertes Isocyanat. Diese Bestandteile der Prepolymerabmischungen bilden, wegen ihrer höheren Flüchtigkeit, das eigentliche Gefährdungspotential. Daneben besteht aber bei zahlreichen Anwendern ein Akzeptanzproblem, das durch die Deklarierungspflicht derartiger Produkte als toxisch und die Einstufung der entleerten Behälter als Sonderabfall noch gefördert wird. Dies gilt insbesondere für den Heimwerker, der sein Produkt in Baumärkten bezieht.

Insgesamt haben sich aber Polyurethan-Dämmschäume außerordentlich bewährt. Diese Schäume haben - neben den bekannt guten Dämmeigenschaften - eine Reihe von weiteren positiven Eigenschaften, die ihre Anwendung für viele Einsatzzwecke gefördert haben. Dazu gehören u.a. eine außerordentlich einfache Handhabung, schnelle Aushärtung, gute Anbindung an vorhandene Strukturen, gute Füll- und Ausschäumcharakteristiken, gute Witterungsbeständigkeit und nicht zuletzt eine gute Körperverträglichkeit des ausgehärteten Produktes. In der Tat kann man fertige Polyurethan-Dämmschäume als nicht toxisch einstufen.

Es gibt eine Reihe von Maßnahmen, die Toxizität herkömmlicher verschäumbarer Polymerabmischungen für Druckdosen herabzusetzen, insbesondere durch Auswahl bestimmter Polyisocyanate zur Prepolymerherstellung und durch Herabsetzung des Anteils monomerer Bestandteile in den Prepolymerabmischungen. Insgesamt sind mit diesen Maßnahmen auch Erfolge erzielt worden, jedoch löst dies nicht das oben erwähnte Akzeptanzproblem, da derartige "entschärfte" Abmischungen nach wie vor Isocyanathaltig sind.

Ein Ansatz zur Lösung des Toxizitätsproblems ist die Verwendung von Silan-terminierten Polyurethanprepolymeren, die unter dem Einfluss von Feuchtigkeit aushärten, siehe WO 00/04069 A1. Diese Silan-terminierten Schaumbildner haben sich im Prinzip bewährt, sind jedoch in der Herstellung ausgesprochen kostenaufwendig. Es handelt sich dabei um herkömmliche Prepolymere auf Polyurethanbasis, bei denen die Isocyanattermini gegen Silantermini ausgetauscht sind.

Die Silan-terminierten Prepolymersysteme werden überwiegend als Einkomponentensysteme eingesetzt, können jedoch auch als Zweikomponentenschäume verwandt werden.

Einkomponenten-Polyurethanschäume werden zumeist durch Ausbringung der Prepolymerzusammensetzung aus Aerosoldosen mit Hilfe von Treibmitteln an Ort und Stelle mit einem Raumgewicht von 10 bis 50 g/l verarbeitet. Diese sogenannten 1K-Schäume sind feuchtigkeitshärtend, d. h. sie können alleine mit der in der Luft enthaltenen Feuchtigkeit aushärten.

Zweikomponenten-Polyurethanschäume benötigen zum Aushärten der Prepolymerzusammensetzung eine zweite reaktive Komponente, in der Regel ein Polyol, ein Polyamin oder Wasser, die unmittelbar vor der Schaumbildung zugesetzt werden muss. Die Aushärtung dieser sogenannten 2K-Schäume kann durch Katalysatoren beschleunigt werden. Raumgewichte bei 2K-Schäumen liegen typischerweise bei 10 bis 100 g/l.

Übergangsformen zwischen 1 K- und 2K-Schäumen sind möglich. In diesem Fall wird dem Prepolymer vor dem Ausbringen eine zur Umsetzung der Isocyanatgruppen nicht ausreichende Menge einer zweiten Komponente, wie vorstehend beschrieben, zugesetzt. Für diese Übergangsformen hat sich die Bezeichnung 1,5K-Schäume ausgebildet.

Soweit die Aushärtung von Isocyanat-terminierten Prepolymeren mit in der umgebenden Atmosphäre enthaltenem oder mit zugesetztem Wasser erfolgt, wird bei der Reaktion der Isocyanatgruppen CO₂ freigesetzt, das den Schaumbildungsprozess bedingt oder fördert. Je nach Bedarf kann der Schaumbildungsprozess durch Treibgase unterstützt oder herbeigeführt werden. Als Treibgase werden derzeit meist bei Raumtemperatur gasförmige Fluorkohlenwasserstoffe, Kohlenwasserstoffe und/oder Dimethylether verwandt, aber auch CO₂, N₂ oder N₂O. 2K-Systeme, die mit einem Polyol oder Polyamin vernetzt werden, bilden dagegen kein CO₂, so dass die Schaumbildung allein mit Hilfe der zugesetzten Treibgase erfolgt.

2K-Prepolymersysteme zur Erzeugung von Dämmschäumen aus Druckdosen bestehen in der Regel aus zwei Komponenten. Zum einen ist dies die eigentliche Prepolymerkomponente, zum anderen die Vernetzerkomponente. Die Prepolymerkomponente wird ausgehend von einem Polyisocyanat und einem Polyol erzeugt. Dieses Prepolymer kann Isocyanattermini oder andere reaktive Termini enthalten.

Darüber hinaus enthält die Prepolymerkomponente in der Regel Zusätze, wie z. B. Flammschutzmittel, Zellregulanzien, Stabilisatoren, Weichmacher, Stellmittel zur Einstellung der Viskosität und anderer wichtiger Eigenschaften sowie Katalysatoren.

Die Prepolymerkomponente enthält darüber hinaus das zum Ausbringen und Verschäumen erforderliche Treibmittel.

Die Vernetzerkomponente von Zweikomponentensystemen enthält in der Regel nur die zur Vernetzung des Prepolymers erforderliche Zusammensetzung. In der Regel ist dies ein mit dem Prepolymer reaktives mindestens bifunktionelles chemisches Reagenz, ggf. zusammen mit einem Katalysator.

In Anbetracht des hohen Preises der Silan-terminierten Prepolymere wäre es wünschenswert, über Prepolymerabmischungen zu verfügen, die Dämmschäume bilden, die die Eigenschaften herkömmlicher Polyurethanschäume aufweisen, nicht mehr über freie Isocyanatgruppen verfügen, kostengünstig herstellbar und einfach und zuverlässig in der Handhabung sind.

Es wurde nun überraschend gefunden, dass eine Prepolymerabmischung der eingangs genannten Art, bei der das Prepolymer endständige aktivierte Doppelbindungen aufweist und der Vernetzer zur nukleophilen Addition an die aktivierten Doppelbindungen des Prepolymers befähigte Funktionen hat, diese Aufgabe löst.

Bei dem Prepolymer des erfindungsgemäßen Prepolymersystems handelt es sich um herkömmliches Polyurethanprepolymer, dessen Isocyanatgruppen durch Gruppen ersetzt wurden, die eine aktivierte Doppelbindung enthalten. Diese aktivierten Doppelbindungen, bei denen es sich auch konjugierte Doppelbindungssysteme handeln kann, sind zur nukleophilen Addition, beispielsweise im Wege einer Michael-Addition befähigt. Solche aktivierten Doppelbindungen liegen dann vor, wenn die Doppelbindungen durch stark Elektronen anziehende Gruppen substituiert sind, welche die Elektronendichte in der Doppelbindung verringern und dadurch den nukleophilen Angriff erleichtern. Exemplarische Beispiele von Substraten, die nukleophile Additionen eingehen können, sind α,β-ungesättigte Carbonylverbindungen, Nitroolefine, α,β-ungesättigte Nitrile und auch polyhalogenierte Olefine. Die mit aktivierten Doppelbindungen versehenen Prepolymere haben vorzugsweise eine Funktionalität von wenigstens 2. Bei Verwendung von Fettalkoholen zur Erhöung der Treibgaslöslichkeit kann eine Funktionalität von > 1,8 ausreichend sein. Weiterhin handelt es sich vorzugsweise um α,β-ungesättigte Systeme, insbesondere um Carbonylverbindungen und Nitrile und ganz besonders bevorzugt um Acrylsysteme unter Einschluss von Halogenacrylaten und Cyanoacrylaten.

Beispielsweise kann ein Isocyanat-terminiertes Prepolymer durch Acrylsäure in ein Acrylat-terminiertes System umgewandelt werden. Bei der Reaktion von Isocyanatgruppen mit Acrylsäure wird allerdings in großen Mengen CO₂ gebildet, was die Herstellung des Acrylat-terminierten Prepolymers und insbesondere die von den Montageschaumherstellern bevorzugte Prepolymerbildung in der Druckdose erschweren kann. Es ist deshalb bevorzugt, α,β-ungesättigte Carbonylverbindungen einzusetzen, die Hydroxy-funktionalisiert sind, so dass die Reaktion mit den Isocyanatgruppen über die Hydroxyfunktion stattfinden kann. Hierzu bevorzugt sind Hydroxy-funktionalisierte Acrylate, insbesondere 2-Hydroxyethylacrylat, das kommerziell erhältlich ist. Diese Reaktion läuft ohne die Freisetzung von CO₂ und kann entsprechend in der Druckdose durchgeführt werden. Der Zusatz von geringen Mengen Acrylsäure oder dgl. Begünstigt allerdings die Bildung von CO₂ in einer Menge, die als Treibgas fungieren kann.

Weitere Beispiele für aktivierte Doppelbindungssysteme, die erfindungsgemäß eingesetzt werden können, sind Methacrylate, Crotonate, Sorbate und Zimtsäurederivate, insbesondere deren Ester mit Alkylenglykolen.

Weiterhin geeignet für die erfindungsgemäße Modifizierung von Isocyanat-terminierten Prepolymeren sind Maleinsäurederivate, insbesondere Maleinimide. Beispielsweise können genannt werden die Imide von Hydroxyanilin und Maleinsäure, insbesondere das von 4-Hydroxyanilin.

Als Vernetzer kommen übliche, wenigstens bifunktionelle Vernetzer in Frage, die zur nukleophilen Addition an die aktivierten Doppelbindungen des Prepolymers befähigte Funktionen aufweisen. Insbesondere handelt es sich dabei um Polyamine und Polyhydroxyverbindungen.

Als Polyamine kommen aliphatische und aromatische Polyamine in Frage, beispielsweise solche mit bis zu 14 Kohlenstoffatomen. Bevorzugt sind bifunktionelle aliphatische Amine, insbesondere Alkylendiamine. Besonders bevorzugt ist Ethylendiamin.

Zur nukleophilen Addition befähigt sind ferner aliphatische und aromatische Polyhydroxyverbindungen in basischen Systemen. Beispielhaft genannt werden können Phenole und Glykole, wobei eine katalytisch wirkende Menge einer basischen Substanz erforderlich ist, beispielsweise KOH, ein Alkoholat oder auch ein Amin. Bevorzugt ist hier eine Mischung aus Ethylenglykol mit KOH.

Wie schon das Prepolymer ist auch der Vernetzer hinsichtlich seiner reaktiven Gruppen mindestens bifunktionell, damit eine Vernetzungsreaktion aufrecht erhalten werden kann. Höher funktionelle Vernetzer können die Vernetzungsdichte und damit z. B. die Schaumhärte positiv beeinflussen.

Es ist festzuhalten, dass die erfindungsgemäßen Prepolymere zwar Termini aus aktivierten Doppelbindungen aufweisen, im Übrigen aber im Kern ein herkömmliches Polyurethanprepolymer sind, d. h. auf der Reaktion eines üblichen Polyisocyanats mit einem üblichen Polyol beruhen.

Zur Herstellung von üblichen Prepolymeren wird zumeist von einigen wenigen gängigen Polyisocyanaten ausgegangen, wie Diisocyanatodiphenylmethan (MDI), sowohl in roher Form als auch in Form der reinen 2,4'- und 4,4'-Isomeren oder von deren Mischungen. Roh-MDI enthält neben dem sogenannten 2-Kern-MDI auch mehrkernige Varianten. Entsprechendes gilt für Tolylendiisocyanat (TDI), das in Form mehrerer Isomerer und auch mehrkerniger Produkte verwandt werden kann. Weitere übliche Polyisocyanate sind Isophorondiisocyanat (IPDI), Diisocyanatonaphthalin (NDI), Triisocyanatotriphenylmethan und Hexamethylendiisocyanat (HDI). Für die Herstellung des erfindungsgemäß zum Einsatz kommenden Prepolymergerüsts sind HDI, MDI und TDI besonders bevorzugt.

Für die Herstellung dieses Prepolymergrundgerüsts können übliche Polyole eingesetzt werden. Besonders geeignet sind Polyesterpolyole und Polyetherpolyole, wie sie in der Literatur vielfach beschrieben sind, insbesondere solche mit einer OH-Zahl im Bereich von 30 bis 300. Darüber hinaus können hydroxylgruppenhaltige Pflanzenöle und modifizierte hydroxylgruppenhaltige Pflanzöle eingesetzt werden mit einer OH-Zahl im Bereich von bevorzugt 100 bis 300.

Zur Ausbringung der Prepolymerkomponente aus den Druckdosen enthält das erfindungsgemäße Prepolymersystem in der Prepolymerkomponente ein Treibmittel, beispielsweise niedrigsiedende Fluorkohlenwasserstoffe, Kohlenwasserstoffe und/oder Ether. Besonders bevorzugt sind die Fluorkohlenwasserstoffe R124, R125, R134a, R142b, R143 und R152a, die reinen Kohlenwasserstoffe Propan, Butan und Isobutan sowie Dimethylether. Weiterhin können CO₂, N₂O oder N₂ als Treibmittel verwandt werden. Beliebige Kombinationen dieser Gase sind möglich. Bei Druckdosenformulierungen sind Treibgasgehalte von 5 bis 40 Gew.-%, insbesondere 5 bis 20 Gew.-%, bezogen auf die gesamte Prepolymerkomponente, bevorzugt. Der Gehalt an unter den herrschenden Druckbedingungen nicht kondensierbaren Gasen sollte so bemessen sein, dass das auf den Leerraum des Druckbehälters bezogene Volumen einen Druck von etwa 8 bis 10 Bar ergibt, je nach der einschlägigen nationalen Vorschrift für Druckbehälter (Aerosoldosen). Da bei der Vernetzung kein CO₂ freigesetzt wird, muss genügend Treibgas sowohl für die Ausbringung als auch für die Verschäumung vorhanden sein.

Das Prepolymersystem kann mehrfach funktionelle Acrylat-Reaktivverdünner zugesetzt enthalten, die zugleich der Viskositätsregulierung dienen. Hierdurch lässt sich Einfluss auf die Vernetzungsdichte nehmen, die bei Montagezwecken eine Rolle spielt.

Das erfindungsgemäße Prepolymersystem enthält auf diesem Gebiet übliche Zusätze, wie beispielsweise Flammschutzmittel, Zellregulantien, Schaumstabilisatoren, Viskositätsregulierer und Weichmacher. Als Flammschutzmittel kommen u.a. auf dem Gebiet bekannte phosphorhaltige Verbindungen, insbesondere Phosphate und Phosphonate in Frage, beispielsweise Triarylphosphate oder Trischlorpropylphosphat. Diese Verbindungen haben gleichzeitig weichmachende und viskositätsregulierende Eigenschaften. Besonders bevorzugt sind Kombinationen von Phosphaten oder Phosphonaten einerseits und Polyesterolen oder Rizinusöl andererseits, die die Herstellung von flammhemmend eingestellten B2-Schäumen erlauben. Als weitere Flammschutzmittel können Diphenylkresylphosphat, Triphenylphosphat, Dimethylmethanphosphonat und dergleichen genannt werden. Ferner können Chlorparaffine zu diesem Zweck eingesetzt werden, wie auch halogenierte Polyester- und Polyetherpolyole, beispielsweise handelsübliches bromiertes Polyetherpolyol. Letzteres dient gleichzeitig als Polyolkomponente zur Herstellung des Prepolymers.

Als Zellregulantien werden übliche eingesetzt, wie sie beispielsweise auf Basis von Silikon im Handel erhältlich sind. In Frage kommt hier vernetzungsfähiges flüssiges Polybutadien. Bei den Stabilisatoren handelt es sich um handelsübliche Silikonstabilisatoren.

Die Prepolymerkomponente sollte, ohne zugesetztes Treibmittel, zweckmäßigerweise eine Anfangs-Gebrauchsviskosität bei 20°C von 5.000 bis 20.000 mPa.s und vorzugsweise von 8.000 bis 15.000 mPa.s haben.

Der Gehalt an aktivierten Doppelbindungen sollte in der Regel nicht über 50 Gew.-% und vorzugsweise nicht über 30 Gew.-%, jeweils bezogen auf das Prepolymer, betragen.

Die erfindungsgemäßen Prepolymersysteme können aus an und für sich bekannten 2K-Aerosoldosen verschäumt werden, bei denen die Vernetzerkomponente in einer sogenannten Vernetzerhülse vorliegt. Solche Dosen sind vielfach beschrieben, beispielsweise in der WO 85/00157 A1.

Die Erfindung wird durch das nachstehende Beispiel näher erläutert:

### Beispiel:

500 g aromatisches Polyisocyanatprepolymer auf Basis von Diphenylmethandiisocyanat (Desmodur^{®}E22) wurden mit 112 g 2-Hydroxyethylacrylat versetzt und ausreagieren gelassen. Das so erhaltene Acrylat-terminierte Prepolymer ist als Schaumbildner geeignet.

300 g des oben erhaltenen Acrylatprepolymers werden in eine 2K-Druckdose gegeben, in der sich eine herkömmliche Vernetzerhülse mit 15 g Ethylendiamin und 9 g Schaumstabilisator (Tegostab^{®}B8443) befinden. Die Vernetzerhülse ist versiegelt. Nach dem Einbringen des Prepolymers wird die Druckdose mit einem Ventil verschlossen und mit 100 g R134a und 20 g Dimethylether versetzt.

Die Druckdose ist nach Äquilibrierung und Einstellung auf Raumtemperatur gebrauchsfertig. Sie ergibt nach Auslösung der Vernetzerhülse einen Isocyanatfreien, klebenden Schaum, der als Montage- und Dämmschaum geeignet ist.

Bevorzugt ist die Reaktion von NCO-terminierten Prepolymeren mit reaktiven Acrylaten in der Druckdose, die nach dem Verschließen mit dem Treibgas beaufschlagt wird. Alternativ ist aber die Einfüllung fertig reagierter, reaktiver, mit aktiven Doppelbindung versehener Prepolymere in die Dose möglich, wobei die Viskosität 10.000 bis 40.000 mPas bei 20°C betragen sollte, und dann die Beaufschlagung der Druckdose mit Treibgas nach dem Verschließen.

Zur Einstellung der mechanischen Eigenschaften der erfindungsgemäßen Prepolymersysteme können ferner dreifach oder höher funktionelle Polyole und/oder mehrfach funktionelle Reaktivverdünner eingesetzt werden. Aminosilane des Typs R-NH-Si(OR)₃ können als polyfunktionelle Crosslinker und Haftvermittler zugesetzt werden.

## Patentansprüche

1. Prepolymersystem zur Erzeugung von Zwei-Komponenten-Dicht- und Dämmschäumen, enthaltend eine Prepolymerkomponente mit einem Prepolymer auf Polyurethanbasis, Treibgas und zur Schaumbildung benötigte üblichen Zusatzstoffen, sowie eine davon getrennte Vernetzerkomponente mit einem mit dem Prepolymer reaktiven Vernetzer, **dadurch gekennzeichnet, dass** das Prepolymer endständige aktivierte Doppelbindungen aufweist und der Vernetzer zur nukleophilen Addition an die aktivierten Doppelbindungen des Prepolymers befähigte Funktionen.

2. Prepolymersystem nach Anspruch 1, **dadurch gekennzeichnet, dass** Prepolymer und Vernetzer jeweils eine Funktionalität von wenigstens 2 aufweisen.

3. Prepolymersystem nach Anspruch 1 oder 2, **dadurch gekennzeichnet, dass** die aktivierte Doppelbindung eine α,β-ungesättigte Carbonylverbindung ist.

4. Prepolymersystem nach Anspruch 3, **dadurch gekennzeichnet, dass** die Carbonylverbindung ein Acrylat ist.

5. Prepolymersystem nach einem der vorstehenden Ansprüche, **dadurch gekennzeichnet, dass** das Prepolymer auf Polyurethanbasis erhältlich ist aus der Reaktion eines NCO-terminierten Prepolymers mit einem Hydroxy-funktionalisierten Acrylat.

6. Prepolymersystem nach Anspruch 5, **dadurch gekennzeichnet, dass** das Hydroxy-funktionalisierte Acrylat 2-Hydroxyethylacrylat ist.

7. Prepolymersystem nach einem der vorstehenden Ansprüche, **dadurch gekennzeichnet, dass** der Vernetzer ein Polyamin ist.

8. Prepolymersystem nach Anspruch 7, **dadurch gekennzeichnet, dass** der Vernetzer ein Alkylendiamin ist.

9. Prepolymersystem nach Anspruch 8, **dadurch gekennzeichnet, dass** der Vernetzer Ethylendiamin ist.

10. Prepolymersystem nach einem der Ansprüche 1 bis 6, **dadurch gekennzeichnet, dass** der Vernetzer eine Polyhydroxyverbindung in Verbindung mit einer Base ist.

11. Prepolymersystem nach Anspruch 10, **dadurch gekennzeichnet, dass** der Vernetzer aus Ethylenglykol und einer Base besteht.

12. Prepolymersystem nach Anspruch 11, **dadurch gekennzeichnet, dass** die Base KOH, ein Alkoholat oder ein Amin ist.

13. Druckdose, enthaltend ein Prepolymersystem nach einem der vorstehenden Ansprüche.
